(19) **Europäisches Patentamt / European Patent Office / Office européen des brevets**

(11) **EP 2 257 120 B1**

(12) **EUROPEAN PATENT SPECIFICATION**

(45) Date of publication and mention of the grant of the patent:
**26.06.2013 Bulletin 2013/26**

(21) Application number: **09723307.6**

(22) Date of filing: **17.03.2009**

(51) Int Cl.:
*H05B 3/84* (2006.01)    *C03C 17/22* (2006.01)
*C03C 17/06* (2006.01)

(86) International application number:
**PCT/KR2009/001341**

(87) International publication number:
**WO 2009/116787 (24.09.2009 Gazette 2009/39)**

(54) **HEATING ELEMENT AND MANUFACTURING METHOD FOR SAME**

HEIZELEMENT UND HERSTELLUNGSVERFAHREN DAFÜR

ÉLÉMENT CHAUFFANT ET PROCÉDÉ DE FABRICATION DE CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority:
17.03.2008  KR 20080024458
17.03.2008  KR 20080024460
17.03.2008  KR 20080024461
21.03.2008  KR 20080026544
21.03.2008  KR 20080026546
21.03.2008  KR 20080026547
21.03.2008  KR 20080026548
21.03.2008  KR 20080026550
15.05.2008  KR 20080045175
15.05.2008  KR 20080045178
15.05.2008  KR 20080045177
15.05.2008  KR 20080045179

(43) Date of publication of application:
**01.12.2010 Bulletin 2010/48**

(73) Proprietor: **LG Chem, Ltd.**
**Youngdungpo-gu**
**Seoul 150-721 (KR)**

(72) Inventors:
• **CHOI, Hyeon**
  **Daejeon Metropolitan City 305-761 (KR)**
• **LEE, Dong-Wook**
  **Daejeon Metropolitan City 305-729 (KR)**
• **HWANG, In-Seok**
  **Daejeon Metropolitan City 305-340 (KR)**
• **CHUN, Sang-Ki**
  **Daejeon Metropolitan City 305-500 (KR)**
• **KIM, Su-Jin**
  **Daejeon Metropolitan City 306-787 (KR)**
• **KIM, Ki-Hwan**
  **Daejeon Metropolitan City 305-728 (KR)**
• **HONG, Young-Jun**
  **Daejeon Metropolitan City 302-120 (KR)**

(74) Representative: **Goddar, Heinz J.**
**Boehmert & Boehmert**
**Pettenkoferstrasse 20-22**
**80336 München (DE)**

(56) References cited:
EP-A1- 1 672 960       EP-A1- 1 868 261
EP-A2- 0 375 331       EP-A2- 1 605 729
EP-B1- 0 594 932       GB-A- 1 202 522
JP-A- 2005 100 695     JP-A- 2005 294 006
KR-A- 20050 011 766

## Description

[Technical Field]

The present invention relates to a heating element and a method for manufacturing the same. More particularly, the present invention relates to a heating element that is not well visible, has excellent heating performance at a low voltage, and a method for manufacturing the same.

[Background Art]

In winter or rainy day, frost is formed on a glass surface of a vehicle because of a difference between temperatures of the outside and inside of the vehicle. In addition, in the case of an indoor ski resort, a freezing phenomenon occurs because of a difference between temperatures of the inside where there is a slope and the outside of the slope. In order to solve this, a heating glass has been developed. The heating glass uses a concept where after a hot line sheet is attached to the glass surface or a hot line is directly formed on the glass surface, a current is applied to both terminals of the hot line to generate heat from the hot line, thereby increasing the temperature of the glass surface. It is important that the heating glass for vehicle or construction has low resistance in order to smoothly generate heat, but it should not be offensive to human eye. Accordingly, methods for manufacturing a known transparent heating glass by forming a heating layer through a sputtering process using a transparent conductive material such as ITO (Indium Tin Oxide) or Ag thin film and connecting an electrode to a front end thereof have been proposed. However, the heating glass according to the above method has a problem in that it is difficult to drive it at a low voltage of 40 V or less because of high surface resistance. As the other method, in a photolithography method, since a manufacturing process is complicated and material waste is severe, it is impossible to manufacture products at low cost, such that it cannot be used to manufacture the heating glass.

[Disclosure]

Methods for manufacturing a heating element comprising the features of the introductory portion of claim 1 have already been known from GB 1 202 527 A and EP 1 605 729 A2.

[Technical Problem]

In order to solve the above problems, the present invention has been made in an effort to provide a heating element that is not well visible and has excellent heating performance at a low voltage, and a method for easily manufacturing the same at low cost.

[Technical Solution]

In order to accomplish the above object, an exemplary embodiment of the present invention provides a method for manufacturing a heating element according to claim 1.
In addition, another exemplary embodiment of the present invention provides a heating element according to claim 5.
According to the invention conductive heating pattern of the heating element is formed by using an offset printing method,

[Advantageous Effects]

According to the exemplary embodiments of the present invention, the method for manufacturing a heating element may provide a heating element that has a conductive heating pattern that is not well visible because of a thin line width, has low resistance, and has excellent heating performance at a low voltage, and the process is easily performed and its cost is low.

[Description of Drawings]

FIG. 1 is a view that illustrates an offset printing process.
FIG. 2 illustrates an example of a heating glass for vehicles according to an exemplary embodiment of the present invention.

FIG. 3 is a picture of the heating glass according to an exemplary embodiment of the present invention.

FIGS. 4 to 8 illustrate the conductive heating pattern of the heating glass according to the present invention.

FIG. 9 is a picture of the heating glass that is manufactured in Example 1.

FIG. 10 illustrates a measurement result of the heating properties of the heating glass that is manufactured in Example 1.

FIGS. 11 to 16 illustrate the conductive heating pattern according to an exemplary embodiment of the present invention.

[Best Mode]

Hereinafter, the present invention will be described in detail.

A method for manufacturing a heating element according to an exemplary embodiment of the present invention includes the steps as recited in claim 1.

In the case of when the transparent conductive thin film layer such as ITO is used like the related art, there is a problem in that surface resistance. Since the photolithography method is complicated and high cost is required, it cannot be used in the manufacturing of the heating element. In addition, in the related art, the heating line is formed by attaching the metal line to the glass or attaching the metal paste to the glass by using the method such as screen printing, but in the case of when this method is used, since the line of the heating pattern is too thick, it is apparently observed by the naked eye. Accordingly, it may not be applied to the purpose of the front window for the vehicle where it is important that a view field is ensured.

However, in the present invention, when the heating element is manufactured, the form of the conductive heating pattern is previously determined so that the line width of the pattern is 50 micrometers or less and the pattern the opening ratio is 70% to 99%, and the conductive heating pattern is formed by using the printing method. The heating element which has low surface resistance and excellent heating performance at a low voltage and in which since the heating pattern cannot be discriminated by the naked eye may be provided by making the interval between the lines narrow and controlling the opening ratio, that is, the area that is not occupied by the pattern, within a predetermined range while the conductive heating pattern has the thin line width.

In addition, the form of the finally formed conductive heating pattern may be predicted by previously determining the form of the pattern and forming the heating pattern as it stands on the transparent substrate by using the printing method. Therefore, it is possible to predict the form of the heating pattern on the heating element or performance of the heating element and it is possible to easily manage them. Accordingly, as compared to the pattern that is randomly formed, the state and performance of the heating element are more advantageously managed.

In addition, by forming the form of the above pattern by using the printing method, a relatively low cost is required, the manufacturing process is simple, and it is possible to form the precise conductive heating pattern that has the thin line width.

In the present invention, the printing method is not an offset printing method. printing methods may be used. The printing method may use a roll to roll method, roll to plate, plate to roll or plate to plate method.

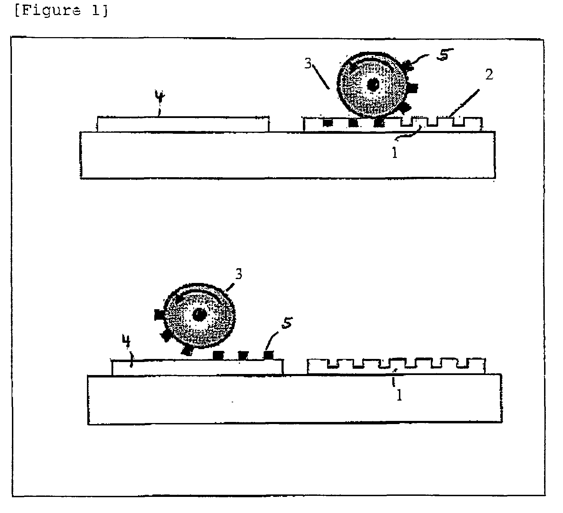

In detail, the offset printing may be performed by using the method in which after the paste 5 is filled in the pattern of the intaglio 1 by using the doctor blade 2 as the first step; the first transferring is performed by rotating the blanket 3 (upper part of FIG. 1) and as a second step, the second transferring is performed on the transparent substrate 4 by rotating the blanket 3.

In the case of the offset printing method, because of the release property of the blanket, since most of the paste is nearly transferred on the transparent substrate, a separate blanket washing process is not required. The intaglio may be manufactured by precisely etching the glass on which the desired electric conductive heating pattern is formed, and metal or DLC (diamond-like carbon) coating may be performed on the glass surface for the durability. The intaglio may be manufactured by etching the metal plate.

In the present invention, in order to implement the more precise conductive heating pattern, the offset printing method is used. FIG. 1 illustrates the offset printing method. According to FIG. 1, after the paste is filled in the pattern of the intaglio by using the doctor blade as the first step, the first transferring is performed by rotating the blanket, and as the second step, the second transferring is performed on the surface of the transparent substrate by rotating the blanket.

In the present invention, it is preferable that as the conductive heating material, metal that has an excellent thermal conductivity is used. In addition, the specific resistance value of the conductive heating pattern material is in the range of 1 microOhm cm to 200 microOhm cm. As a detailed example of the conductive heating pattern material, copper, silver, carbon nanotube (CNT) may be used, and silver is most preferable. In the present invention, the conductive heating material may be used in a particle form. In the present invention, as the conductive heating pattern material, copper particles that are coated with silver may be used.

In the present invention, the paste may further include an organic binder in addition to the above conductive heating material so that the printing process is easily performed. It is preferable that the organic binder has a volatile property in the sintering process. As the organic binder, there are polyacryl resin, polyurethane resin, polyester resin, polyolefine resin, polycarbonate resin and cellulose resin, polyimide resin, polyethylene naphthalate resin and denatured epoxy resin, but it is not limited thereto.

In order to improve the attachment ability of the paste to the glass, the paste may further include a glass frit. The glass frit may be selected from commercial products, but it is preferable to use the environmentally friendly glass frit that includes no lead component. In this case, it is preferable that the average diameter of the glass frit is 2 micrometers or less and the maximum diameter thereof is 50 micrometers or less.

If necessary, a solvent may be further added to the paste. As the solvent, there are butyl carbitol acetate, carbitol acetate, cyclohexanon, cellosolve acetate and terpineol, but it is not limited thereto.

In the present invention, in the case of when the paste that includes the conductive heating pattern material, organic binder, glass frit and solvent is used, it is preferable that the weight ratio of the conductive heating material is 50 to 90%, the weight ratio of the organic binder is 1 to 20%, the weight ratio of the glass frit is 0.1 to 10% and the weight ratio of the solvent is 1 to 20%.

The above paste may be printed so that the line width of the line that forms the conductive heating pattern is 50 micrometers or less, much more preferably 30 micrometers or less by using the printing method. In particular, in the case of when the line width is 30 micrometers or less, since the conductive heating pattern is not shown by the eye, it is advantageous to ensure the view field. For example, the line width of the conductive heating pattern may be in the range of 5 micrometers to 30 micrometers by the printing method.

In the present invention, the above heating pattern may be formed so that the line width and the line height are uniform by the method or it may artificially include the different line widths or line heights. That is, in the case of when the printing method is used by using the paste, it is possible to control the interval between lines of the conductive heating pattern. In the pattern, since it is preferable that the opening ratio, that is, the ratio of the area of the transparent substrate that is not covered with the pattern is 70% or more, it is preferable that the interval between the lines of conductive heating pattern is 30 mm or less. In the case of when the conductive heating patterns do not cross each other, it is preferable that the interval between the lines of the conductive heating pattern is 200 micrometers or more and 30 mm or less. The height of the line from the surface of the may be printed so that it is 1 to 100 micrometers, and preferably about 3 micrometers.

In the present invention, the line width and line height of the heating pattern may be made uniform by the above methods. In the present invention, the uniformity of the heating pattern may be in the range of $\pm 3$ micrometers in the case of the line width and in the range of $\pm 1$ micrometer in the case of the line height.

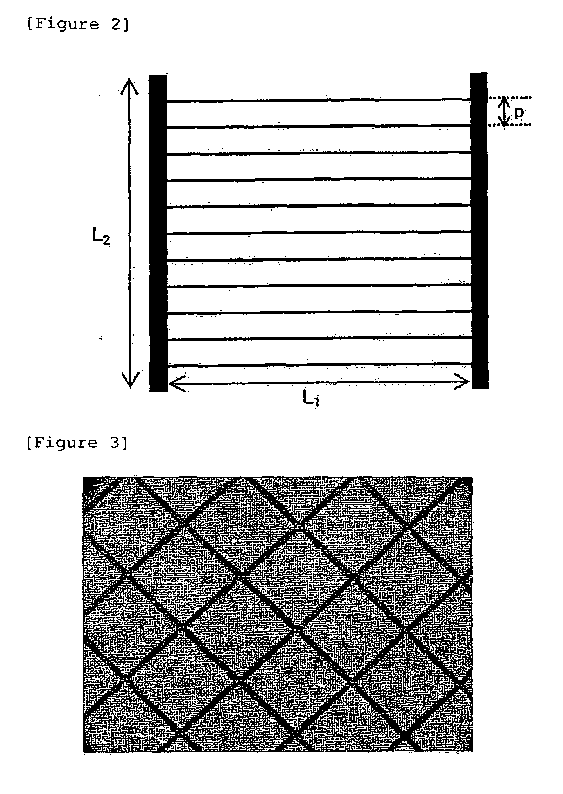

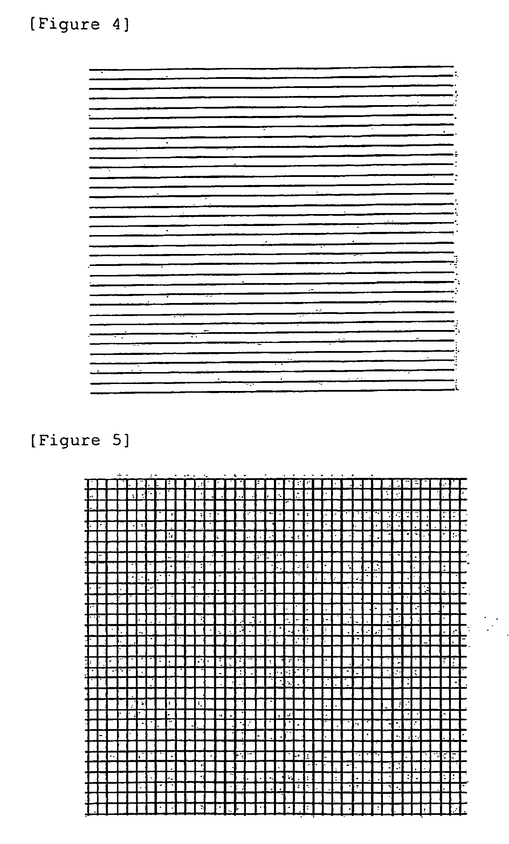

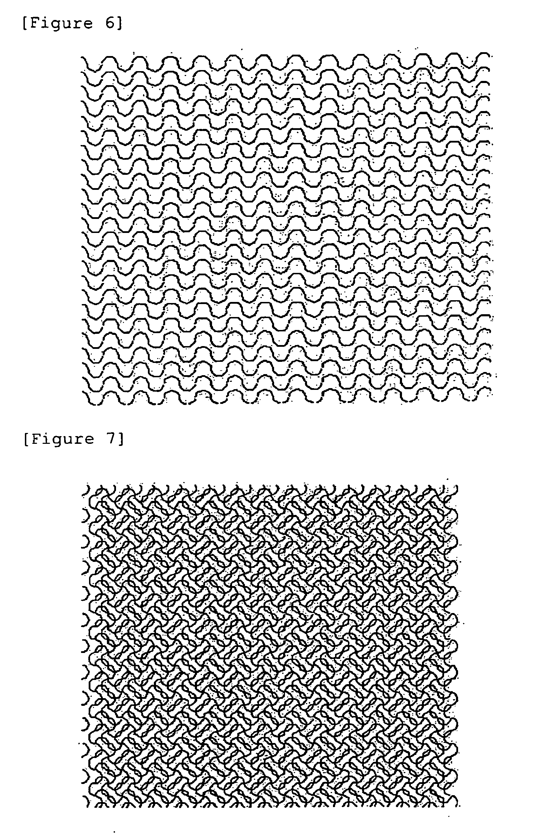

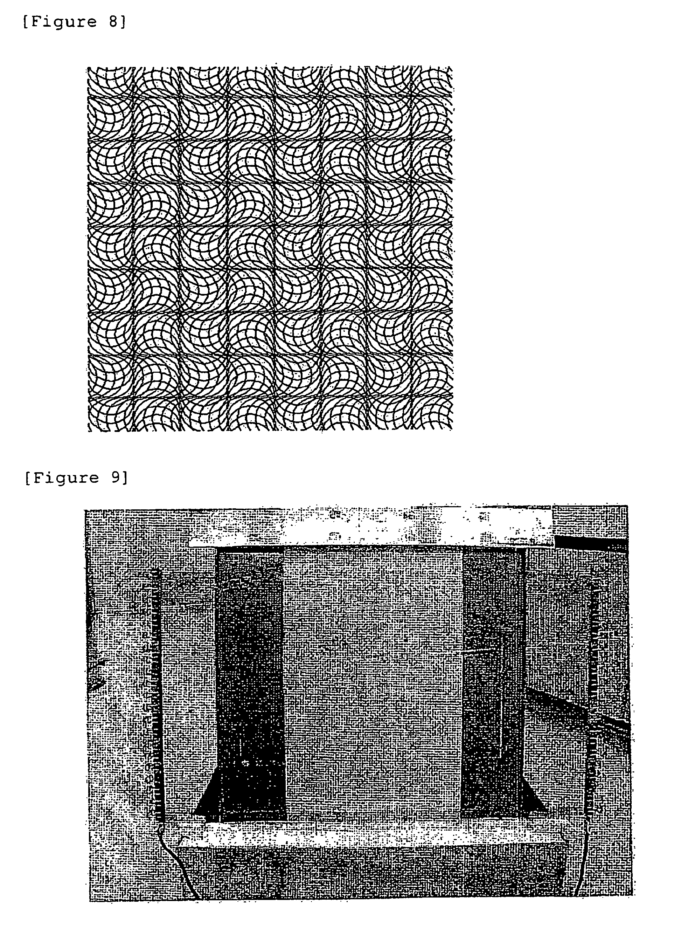

The printing pattern may be stripe, diamond, rectangular lattice, circle, wave pattern, grid, 2-dimensional grid, and the like as shown in FIGS. 3, 4 to 7, but is not limited to a predetermined form, and it is preferable that it is designed so that light that is emitted from a predetermined light source does not suppress optical properties by diffraction and interference. That is, in order to minimize the regularity of the pattern, the spacing of the tide pattern, sine wave, and the lattice structure and the pattern where the line thickness is made nonuniform may be used. In addition, in order to improve the optical properties, various patterns as shown in FIG. 8 may be added in addition to the above pattern. In addition, the additional dot patterns may be irregularly formed while they are not connected to the above pattern. In this case, it is preferable that the patterns and the dot patterns have the size of 30 micrometers or less. If necessary, the printing pattern may be a combination of two or more patterns. In the present invention, the line that configures the heating pattern may be formed of the straight lines, or various modifications such as curved lines, wave lines, and zigzag lines may be feasible.

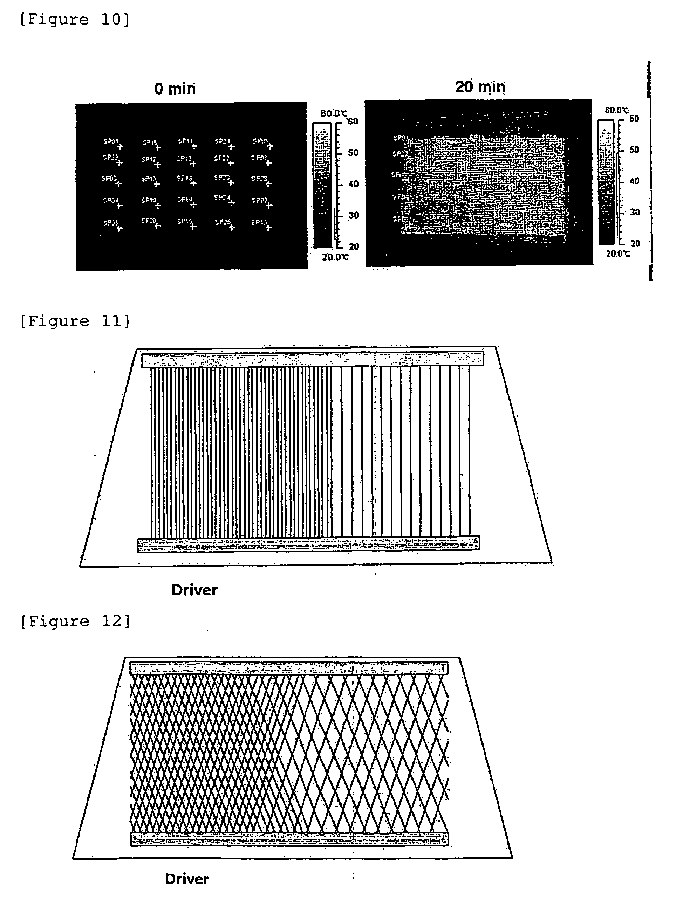

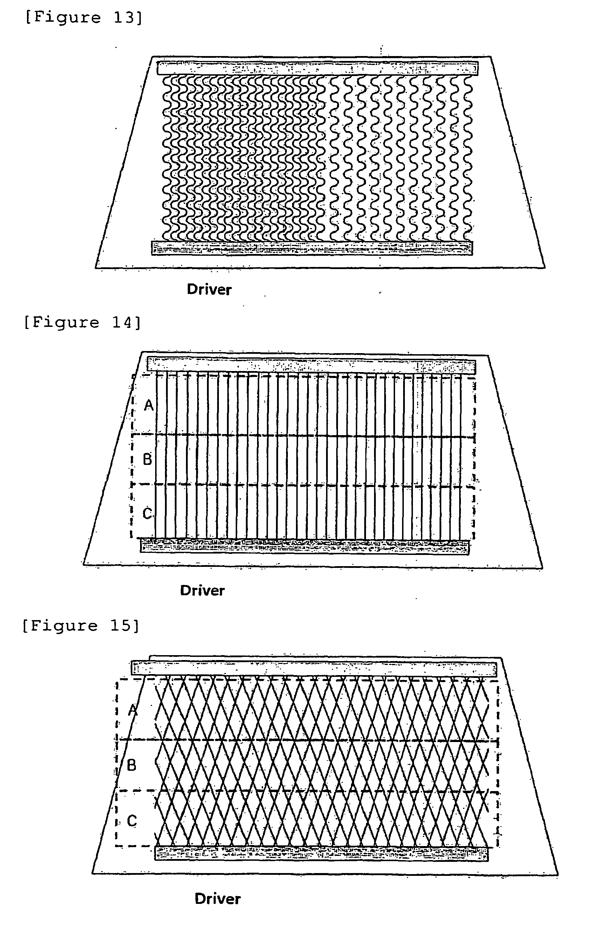

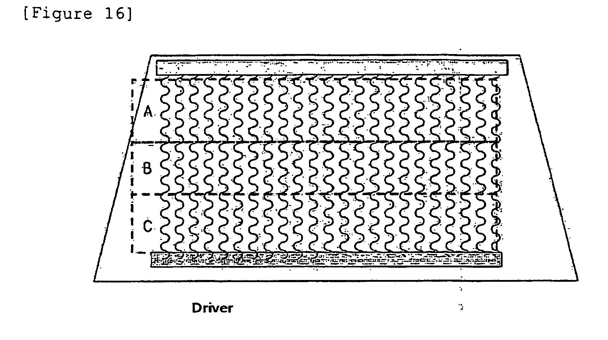

In the present invention, in the case of when the heating pattern is formed on the transparent substrate by using the following method, the line width and line height may be made uniform. According to an exemplary embodiment of the present invention, at least a portion of the conductive heating pattern may be different from the remaining pattern. The desired heating pattern may be obtained by this configuration. For example, in the vehicle glass, in order to ensure the view field first in the area which corresponds to the front surface of the driver, the heating patterns of the corresponding area and the remaining area may be different from each other. The line widths and line intervals of the printing pattern may be different from each other so that at least a portion of the heating pattern is different from the remaining printing pattern. Therefore, the heating may more rapidly or efficiently occur at a desired place. That is, as shown in FIGS. 11 to 13, the interval between the lines may be controlled, and as shown in FIGS. 14 to 16, much heat emission may be obtained in the B area by using the large line width in the A and C areas and the small line width in the B area. The heating element according to an exemplary embodiment of the present invention may include at least two areas where the line widths or line intervals of the heating pattern are different.

According to an exemplary embodiment of the present invention, the heating element may include an area in which the conductive heating pattern is not formed. Transmission and reception that have a predetermined frequency can be performed by allowing at least a portion of the heating element not to form the conductive heating pattern, and information transmission and reception may be performed between the internal space and the external space. In this case, the area in which the conductive heating pattern is not formed may have an area that varies according to the desired frequency of the transmission and reception. For example, in order to pass the electromagnetic wave of 1.6 GHz that is used in the GPS, the area that has the long side that is 1/2 (9.4 cm) or more of the above wavelength is required. The area in which the conductive heating pattern is not formed may have an area that can transmit and receive the desired frequency, and its form is not particularly limited. For example, in the present invention, in order to pass the electromagnetic wave, the area in which the conductive heating pattern is not formed may provide the heating element that is provided with one or more semicircular areas that have the diameter of 5 to 20 cm.

According to an exemplary embodiment of the present invention, the conductive heating pattern may be blackened. If the paste that includes the metal material is sintered at the high temperature, metal gloss is shown, such that the visibility may be lowered because of the reflection of light. The problem may be prevented by blackening the conductive heating pattern. In order to blacken the conductive heating pattern, the blackening material may be added to the paste for forming the heating pattern or the blackening treatment may be performed after the paste is printed and sintered, thereby blackening the conductive heating pattern.

As the blackening material that may be added to the paste, there are metal oxide, carbon black, carbon nanotube, black pigment, colored glass frit and the like. In this case, the composition of the paste may include 50 to 90 wt% of the conductive heating pattern material, 1 to 20 wt% of organic binder, 1 to 10 wt% of blackening material, 0.1 to 10 wt% of glass frit, and 1 to 20 wt% of solvent.

When the blackening treatment is performed after the sintering, the composition of the paste may include 50 to 90 wt% of the conductive heating material, 1 to 20 wt% of organic binder, 0.1 to 10 wt% of glass frit, and 1 to 20 wt% of solvent. The blackening treatment after the sintering includes dipping into the oxidized solution, for example, solution that includes the Fe or Cu ion, dipping into the solution that includes halogen ions such as a chlorine ion, dipping into hydrogen peroxide and nitric acids, and treatment using the halogen gas.

In the present invention, in the case of when the above paste is used, if the paste is sintered after it is printed in the desired pattern form, the heating pattern that has the conductivity is formed. In this case, the sintering temperature is not particularly limited, but it may be 500 to 800°C and preferably 600 to 700°C. In the case of when the transparent substrate that forms the heating pattern is glass, if necessary, in the above sintering step, the glass may be shaped for the purpose of construction or vehicles. For example, in the step for shaping the glass for vehicles in a curved line, the paste may be sintered. In addition, in the case of when the plastic substrate or film is used as the transparent substrate that forms the conductive heating pattern, it is preferable that the sintering is performed at a relatively low temperature. For example, it may be performed at 50 to 350°C.

As described above, after the conductive heating pattern is formed, the step for forming the bus bar at both ends of the conductive heating pattern, and the step for preparing the power portion that is connected to the bus bar are performed. These steps may use a method that is known in the art. For example, the bus bar may be simultaneously formed in conjunction with the formation of the conductive heating pattern, and may be formed by using the other printing method after the conductive heating pattern is formed. For example, after the conductive heating pattern is formed by using the offset printing method, the bus bar may be formed through the screen printing. In this case, it is appropriate that the thickness of the bus bar is 1 to 100 micrometers and it is preferably 10 to 50 micrometers. If it is less than 1 micrometer, since the contact resistance between the conductive heating pattern and the bus bar is increased, local heating may be performed at the contact portion, and if it is more than 100 micrometers, the cost of the electrode material is increased. The connection between the bus bar and power may be performed through soldering and physical contact to the structure that has good conductive heat emission.

The heating element according to an exemplary embodiment of the present invention includes an additional transparent substance that is provided on a side on which the conductive heating pattern of the transparent substance is provided. An attachment film may be provided between the conductive heating pattern and additional transparent substance. In the course of attaching them, the temperature and pressure may be controlled.

In one detailed embodiment, the attachment film is inserted between the transparent substance on which the conductive heating pattern is formed and additional transparent substance, and they are put into the vacuum bag, and reduced in pressure and increased in temperature or increased in temperature by using the hot roll, thus removing the air, thereby accomplishing the first attachment. In this case, the pressure, temperature and time may vary according to the kind of the attachment film, and in general, the temperature may be gradually increased from normal temperature to 100°C at a pressure of 300 to 700 Torr. In this case, it is preferable that the time is generally 1 hour or less. The preliminarily attached layered structure that is first attached is subjected to the second attachment process by the autoclave process where the temperature is increased while the pressure is added in the autoclave. The second attachment varies according to the kind of the attachment film, but it is preferable that after the attachment is performed at the pressure of 140 bar or more and the temperature in the range of 130 to 150°C for 1 to 3 hours, and preferably about 2 hours, it is slowly cooled.

In the other detailed embodiment, the method for attaching them through one step by using the vacuum laminator device unlike the above two step attachment process may be used. The attachment may be performed by stepwisely increasing the temperature to 80 to 150°C and cooling them so that the pressure is lowered (~ 5 mbar) until the temperature is 100°C and thereafter the pressure is added (~ 1000 mbar).

Here, any material that has an adhesive strength and is transparent after attaching may be used as the material of the adhesive film. For example, the PVB film, EVA film, PU film and the like may be used, but is not limited thereto. The adhesive film is not particularly limited, but it is preferable that its thickness is in the range of 100 micrometers to 800 micrometers.

In the above method, the additional attached transparent substance may be formed of only the transparent substance and may be formed of the transparent substance that is provided with the conductive heating pattern that is manufactured as described above. The additional transparent substance may be a glass or plastic substrate or a plastic film.

In addition, another embodiment of the present invention provides a heating element according to claim 5. The heating element may include additional transparent substance that is provided on the side on which the conductive heating pattern is disposed. The additional transparent substance may be a glass or plastic substrate or a plastic film.

The conductive heating pattern that is formed by the printing method may slightly vary according to the kind of the paste or the printing method, but the surface thereof may be rounded by the surface tension. This surface shape may not be formed by a known photolithography method. The vertical cross section of the pattern that is rounded may be a lenticular lens shape. It is preferable that the angle between the tangent at the contact point between the pattern and the surface of transparent substrate and the surface of the transparent substrate is 80° or less, preferably 75° or less, and more preferably 60° or less. It is preferable that in the rounded upper surface of the vertical cross section of the pattern, the straight line area is 1/50 or less in a circumference direction.

The line width of the conductive heating pattern of the heating element is 50 micrometers or less, more preferably 30 micrometers or less, much more preferably 25 micrometers or less, and the interval between the lines is 30 mm or less, and the height of the line is 1 to 100 micrometers, and more preferably about 3 micrometers.

The heating element according to an exemplary embodiment of the present invention may to the power for heat emission, and at this time, the heating amount is 100 to 700 W per m2, and preferably 200 to 300 W. Since the heating element according to an exemplary embodiment of the present invention has excellent heating performance at the low voltage, for example, 30 V or less, and preferably 20 V or less, it may be usefully used in vehicles and the like. The resistance of the heating element is 5 ohm/square or less, preferably 1 ohm/square or less, and more preferably 0.5 ohm/square or less.

The heating element according to an exemplary embodiment of the present invention may have a shape of curved surface.

In the heating element according to an exemplary embodiment of the present invention, it is preferable that the opening ratio of the conductive heating pattern, that is, the area ratio of the glass that is not covered with the pattern is 70% or more. For the uniform heating and visibility of the heating element, it is preferable that the opening ratio of the pattern is constant in the unit area. It is preferable that the permeability deviation of the heating element is 5% or less in respects to a predetermined circle that has the diameter of 20 cm. In this case, the heating element may prevent the local heat emission. In addition, in the heating element, after the heat emission, the standard deviation of the surface temperature of the transparent substance is within 20%, and preferably after the heat emission, within 10% for 5 min.

Since the heating element according to an exemplary embodiment of the present invention has the conductive heating pattern that is formed by using, five or more pattern lines may be disposed per 1 cm of the length of the bus bar.

FIG. 2 illustrates the detailed embodiment of the heating glass for vehicles. It is assumed that the heating amount is 200 to 300 W, in the case of when the hot line where the line width is 20 micrometers and the height is 1.5 micrometers is formed in conjunction with the drawings, if three hot lines per 1 mm, that is, the hot line where the pitch is about 330 micrometers is formed, a desired performance is implemented. In this case, the permeability is 310/330 = 93.9%, which is sufficient to be used for vehicles. In addition, in the case of when specific resistance of the hot line material is two times higher, if the pitch is 165 micrometers, since the permeability is 87.8% while the same heating amount is obtained, this is the permeability that is enough to be used for vehicles.

The heating glass that has the stripe shape according to FIG. 2 has the following physical properties.

$$R\ (\Omega)\ =\ \rho*\ (L1/n\ A)\ =\ \rho*\ (L1*p)/(L2\ *\ w\ *\ h)$$

$$Ar\ (\%)\ =\ (1-w/p)\ *100$$

R : resistance between bus bars

Ar : opening ratio

ρ : specific resistance of the hot line (Ocm)

L1: interval between bus bars (cm)

n : number of the hot line

A : cross-sectional area of the conductive line (cm2)

p : interval between hot lines (cm)

L2 : length of the bus bar (cm)

w : height of the hot line (cm)

h : height of the hot line (cm)

That is, in the case of when the line width w of the hot line is 20 micrometers, the height h is 1.5 micrometers, specific resistance p is 3*10-6 Ocm, the interval p between the lines is 300 micrometers, L1 is 1 m, and L2 is 1 m, R is 0.3 Q, and the opening ratio is 93.3%, and at this time, if 12 V is applied to both terminals, heat emission of 480 W is ensured.

The heating element according to an exemplary embodiment of the present invention may be applied to glass that is used for various transport means such as vehicles, ships, railroads, high-speed railroads, and airplanes, houses or other buildings. In particular, since the heating element according to an exemplary embodiment of the present-invention has an excellent heating property at a low voltage, can minimize side effects by diffraction and interference of single light source after sunset, and can be invisible in the above line width, unlike the known technology, it may be applied to the front window for transport means such as vehicles.

[Mode for Invention]

Hereinafter, the present invention is illustrated through Examples, but the scope of the present invention is not limited by them.

Example 1

The silver paste was manufactured by dissolving 80% of silver particles of 2 micrometers, 5% of polyester resin, and 5% of grass frit in 10% BCA (Butyl carbitol acetate) solvent. As the intaglio, a glass that had patterns that had the interval of 300 micrometers, the width of 20 micrometers, and the depth of 7.5 micrometers and were orthogonally formed in a grid manner was used.

After the silver pattern of the grid manner was formed on the glass substrate (685 mm x 400 mm) by using the method that was shown in FIG. 1 and the offset printer, it was sintered at 600°C for 3 min to form the silver line shown in FIG. 3. In this case, the interval of the formed silver line was 300 micrometers, the line width was 20 micrometers, the line height was 1.5 micrometers, and the opening ratio was 84%. The surface resistance of the glass substrate was 0.4 ohm/square, and the bus bar was formed by contacting the copper strip on the pattern by the clip in the direction of 400 mm (FIG. 9). In this case, the resistance between both terminals was 0.5 ohm. In this case, when the voltage of 8.6 V was applied, the heating amount was 148 W (540 W/m2). As a result of the measurement of the heating using IR vision camera, the temperature was increased from 20°C to 50°C within 5 min shown in FIG. 10. In addition, the temperature deviation percentage value that was obtained by dividing the difference between the maximum value and the minimum value of the temperatures that were measured 20 points that were shown in FIG. 10 by the average value was 6% or less for the measurement time.

Example 2

The silver paste was manufactured by dissolving 80% of silver particles of 2 micrometers, 5% of polyester resin, and 5% of grass frit in 10% BCA (Butyl carbitol acetate) solvent. As the intaglio, a glass that had patterns that had the interval of 300 micrometers, the width of 20 micrometers, and the depth of 7.5 micrometers and were orthogonally formed in a grid manner was used.

After the silver pattern of the grid manner was formed on the glass substrate (685 mm x 400 mm) by using the manner shown in FIG. 1 and the offset printer, before the sintering, the semicircular portion that had the diameter of 10 cm at the lower portion of the pattern was cleaned. The silver line was formed by sintering the pattern for 3 min. In this case, the interval of the formed silver line was 300 micrometers, the width was 20 micrometers, the height was 1.5 micrometers, and the opening ratio was 84%. The surface resistance of the glass substrate was 0.4 ohm/square, and the bus bar was formed by contacting the copper strip on the pattern by the clip in the direction of 400 mm.

In this case, the resistance between both terminals was 0.6 ohm. In this case, when the voltage of 8.6 V was applied, the heating amount was 123 W (450 W/m2).

After the heating glass was installed on one side of the Aluminum box that had the size of 685 mm x 400 mm x 400 mm, a portion of the electrode was contacted with the box. Thereafter, the GPS equipment and the mobile phone were put in the box and the operation thereof was observed.

Example 3

The silver paste was manufactured by dissolving 77% of silver particles of 2 micrometers, 5% of polyester resin, 3% of grass frit, and 5% of cobalt oxides in 10% BCA (Butyl carbitol acetate) solvent. As the intaglio, a glass that had patterns that had the interval of 300 micrometers, the width of 20 micrometers, and the depth of 7.5 micrometers and were orthogonally formed in a grid manner was used.

After the silver pattern of the grid manner was formed on the glass substrate (685 mm x 400 mm) by using the method that was shown in FIG. 1 and the offset printer, it was sintered at 600°C for 3 min to form the silver line shown in FIG. 3. In this case, the interval of the formed silver line was 300 micrometers, the line width was 20 micrometers, the line height was 1.5 micrometers, and the opening ratio was 84%.

After the reflectivity (550 nm) of the conductive pattern was measured by using the UV-3600 that was manufactured by Shimadzu, Co., Ltd., the degree of blackness (L value) was measured from the reflectivity, and the result 31 was obtained.

The bus bar was formed by contacting the copper strip on the pattern by the clip in the direction of 400 mm. In this case, the resistance between both terminals was 0.82 ohm. In this case, when the voltage of 11V was applied, the heating amount was 147 W (540 W/m2). As a result of the measurement of the heating phenomenon by using the IR vision camera, the temperature was increased from 20°C to 50°C within 5 min at room temperature. In addition, the temperature deviation percentage value that was obtained by dividing the difference between the maximum value and the minimum value of the temperatures that were measured 20 points by the average value was 7% or less for the measurement time.

Example 4

The silver paste was manufactured by dissolving 80% of silver particles of 2 micrometers, 5% of polyester resin, and 5% of grass frit in 10% BCA (Butyl carbitol acetate) solvent. As the intaglio, a glass that had patterns that had the interval of 300 micrometers, the width of 20 micrometers, and the depth of 7.5 micrometers and were orthogonally formed in a grid manner was used.

After the silver pattern of the grid manner was formed on the glass substrate (685 mm x 400 mm) by using the method that was shown in FIG. 1 and the offset printer, it was sintered at 600°C for 3 min to form the silver line shown in FIG. 3. In this case, the interval of the formed silver line was 300 micrometers, the line width was 20 micrometers, the line height was 1.5 micrometers, and the opening ratio was 84%.

After 10 g of KI and 2 g of I2 were dissolved in 100 g of water, the iodine aqueous solution was prepared by agitating it for about 10 min, and the blackness treatment was performed by dipping the glass in the iodine aqueous solution for 3 sec. After the reflectivity (550 nm) of the conductive pattern was measured by using the UV-3600 that was manufactured by Shimadzu, Co., Ltd., the degree of blackness (L value) was measured from the reflectivity, and the result 34 was obtained.

The bus bar was formed by contacting the copper strip on the pattern by the clip in the direction of 400 mm of glass. In this case, the resistance between both terminals was 0.6 ohm. In this case, when the voltage of 8.6 V was applied, the heating amount was 123 W (450 W/m2). As a result of the measurement of the heating phenomenon by using the IR vision camera, the temperature was increased from 20°C to 48°C within 5 min. In addition, the temperature deviation percentage value that was obtained by dividing the difference between the maximum value and the minimum value of the temperatures that were measured 20 points by the average value was 8% or less for the measurement time.

Example 5

The silver paste was manufactured by dissolving 80% of silver particles of 2 micrometers, 5% of polyester resin, and 5% of grass frit in 10% BCA (Butyl carbitol acetate) solvent. As the intaglio, a glass that had patterns that had the interval of 300 micrometers, the width of 20 micrometers, and the depth of 7.5 micrometers and were orthogonally formed in a grid manner was used.

After the silver pattern of the grid manner was formed on the glass substrate (685 mm x 400 mm) by using the method that was shown in FIG. 1 and the offset printer, it was sintered at 60°0C for 3 min to form the silver line shown in FIG. 3. In this case, the interval of the formed silver line was 300 micrometers, the width was 20 micrometers, the height was 1.5 micrometers, and the opening ratio was 84%.

The blackness treatment was performed by dipping the glass into 10% FeCl3 solution for 20 sec. After the reflectivity (550 nm) of the conductive pattern was measured by using the UV-3600 that was manufactured by Shimadzu, Co., Ltd., the degree of blackness (L value) was measured from the reflectivity, and the result 33 was obtained.

The bus bar was formed by contacting the copper strip on the pattern by the clip in the direction of 400 mm of glass. In this case, the resistance between both terminals was 0.5 ohm. In this case, when the voltage of 8.6 V was applied, the heating amount was 148 W (540 W/m2). As a result of the measurement of the heating phenomenon by using the IR vision camera, the temperature was increased to 50°C within 5 min. In addition, the temperature deviation percentage value that was obtained by dividing the difference between the maximum value and the minimum value of the temperatures that were measured 20 points by the average value was 7% or less for the measurement time.

Example 6

The silver paste was manufactured by dissolving 80% of silver particles of 2 micrometers, 5% of polyester resin, and 5% of grass frit in 10% BCA (Butyl carbitol acetate) solvent. As the intaglio, the glass which had the same shape as FIG. 14 and is divided into A, B, and C areas at an interval of 300 micrometers, and in which the A and C areas had the width of 30 micrometers, the B area had the width of 20 micrometers, and the pattern of the grid manner orthogonally formed with the depth of 10 micrometers is provided.

After the silver pattern of the grid manner was formed on the glass substrate (685 mm x 400 mm) by using the method that was shown in FIG. 1 and the offset printer, it was sintered at 600°C for 3 min to form the silver line shown in FIG. 3. In this case, the interval between the formed silver lines was 300 micrometers, the A and C areas had the line width of 30 micrometers, the B area had the line width of 20 micrometers, the height was 1.5 micrometers, and the opening ratio was 82%. The bus bar was formed by contacting the copper strip on the pattern by the clip in the direction of 400 mm. In this case, when the voltage of 8.6 V was applied, the heating amount was 120 W (440 W/m2). In this case, theoretically, the heating amount of the A and C areas was 414 W/m2, and the heating amount of the B area was 498 W/m2. As a result of the measurement of the heating phenomenon by using the IR vision camera, the temperatures of the A and C areas were increased from 20°C to 30°C and the temperature of the B area was increased from 20°C to 45°C within 5 min. In addition, the temperature deviation percentage value that was obtained by dividing the difference between the maximum value and the minimum value of the temperatures that were measured 10 points for each area by the average value was 5% or less for the measurement time.

**Claims**

1. A method for manufacturing a heating element, the method comprising:

   determining a form of a pattern in which a line width is 50 micrometers or less and an opening ratio is in the range of 70% to 99%;
   printing a paste (5) that includes the conductive heating material according to the determined pattern on at least one side of a transparent substrate (4);
   forming a conductive heating pattern by sintering the printed paste (5) that includes the conductive heating material;
   forming bus bars on both sides of the conductive heating pattern; and
   providing a power portion that is connected to the bus bars;
   wherein the pattern is configured so that spacing or line thickness is irregular,
   the printing uses an offset printing method, and
   a visible light transmittance deviation of the heating element is 5% or less in respects to a predetermined circle that has the diameter of 20 cm.

2. The method for manufacturing a heating element according to claim 1, wherein the printing is performed so that an interval between lines of the printing patterns is 30 mm or less after sintering, and a height of the line from the surface of the transparent substrate is in the range of 1 to 100 micrometers.

3. The method for manufacturing a heating element according to claim 1, wherein the pattern is one or more combination patterns of stripe, diamond, lattice, circle, wave pattern, grid, 2-dimensional grid, tide pattern and sine wave.

4. The method for manufacturing a heating element according to claim 1, further comprising layering an additional transparent substance on a surface on which the conductive heating pattern of the transparent substrate is formed and attaching them.

5. A heating element obtained by the method according to any one of claims 1 to 4, the heating element comprising:

a) a transparent substrate (4);

b) a conductive heating pattern (5) that is disposed on at least one side of the transparent substrate (4), and has a line width of the pattern being 50 micrometers or less, an opening ratio of the pattern being 70% to 99%;

c) bus bars that are disposed on both ends of the conductive heating pattern; and

d) a power portion that is connected to the bus bars;

wherein the pattern is configured so that spacing or line thickness is irregular,

the conductive heating pattern is formed by using an offset printing method, and

a visible light transmittance deviation of the heating element is 5% or less in respects to a predetermined circle that has the diameter of 20 cm.

6. The heating element according to claim 5, wherein an interval between lines of the conductive heating patterns is 30 mm or less, and a height of the line from the surface of the transparent substrate is in the range of 1 to 100 micrometers.

7. The heating element according to claim 5, wherein a temperature deviation within 5 min after a heating operation is 10% or less by a transmittance deviation of the conductive heating pattern of 5% or less in respect to a predetermined circle that has the diameter of 20 cm.

8. The heating element according to claim 5, wherein 5 or more pattern lines are disposed per 1 cm of the length of the bus bar.

9. The heating element according to claim 5, wherein the heating element includes at least two areas that have different conductive heating patterns.

10. The heating element according to claim 5, wherein the heating element includes an area in which the conductive heating pattern is not formed so that the area transmits and receives a predetermined frequency.

11. The heating element according to claim 5, wherein the conductive heating pattern is blackened.

12. The heating element according to claim 5, wherein the heating element includes an additional transparent substance that is provided on c) the heating pattern.

13. The heating element according to claim 5, wherein the transparent substrate is a glass or plastic substrate.

14. The heating element according to claim 5, wherein the heating element is for a front window of vehicles.

**Patentansprüche**

1. Verfahren zum Herstellen eines Heizelements, wobei das Verfahren umfasst:

Bestimmen einer Form eines Musters, wobei eine Linienbreite 50 μm oder weniger ist und ein Öffnungsverhältnis in dem Bereich von 70% bis 99% ist;

Drucken einer Paste (5), die das leitfähige Heizmaterial gemäß dem bestimmten Muster umfasst, auf zumindest einer Seite eines transparenten Substrats (4);

Formen eines leitfähigen Heizmusters durch Sintern der gedruckten Paste (5), die das leitfähige Heizmaterial umfasst;

Formen von Sammelschienen auf beiden Seiten des leitfähigen Heizmusters; und

Bereitstellen eines Leistungsteil, das mit den Sammelschienen verbunden ist;

wobei das Muster derart ausgestattet ist, dass der Abstand oder die Liniendicke unregelmäßig ist,

das Drucken ein Offsetdruckverfahren verwendet, und

eine Abweichung der Durchlässigkeit für sichtbares Licht des Heizelements 5% oder weniger, bezogen auf einen vorher bestimmten Kreis, der einen Durchmesser von 20 cm hat, ist.

2. Verfahren zum Herstellen eines Heizelements nach Anspruch 1, wobei das Drucken derart durchgeführt ist, dass ein Abstand zwischen Linien des Druckmusters nach dem Sintern 30 mm oder weniger ist und eine Höhe der Linie von der Oberfläche des transparenten Substrats in dem Bereich von 1 bis 100 μm ist.

**3.** Verfahren zum Herstellen eines Heizelements nach Anspruch 1, wobei das Muster eines oder mehrerer Kombinationen von Mustern, ausgewählt aus Streifen, Diamant, Gitter, Kreis, Wellenmuster, Netz, 2-dimensionales Netz, Gezeitenmuster und Sinuswelle, ist.

**4.** Verfahren zum Herstellen eines Heizelements nach Anspruch 1, das ferner das Schichten einer zusätzlichen transparenten Substanz auf einer Oberfläche, worauf das leitfähige Heizmuster des transparenten Substrats geformt wird, und das Anheften derselben umfasst.

**5.** Heizelement erhalten nach einem Verfahren nach einem der Ansprüche 1 bis 4, wobei das Heizelement umfasst:

a) ein transparentes Substrat (4);
b) ein leitfähiges Heizmuster (5), das auf zumindest einer Seite des transparenten Substrats (4) angeordnet ist und eine Linienbreite des Musters hat, die 50 μm oder weniger ist, wobei ein Öffnungsverhältnis des Musters zwischen 70% bis 99% ist;
c) Sammelschienen, die auf beiden Enden des leitfähigen Heizmusters angeordnet sind; und
d) ein Leistungsteil, das mit den Sammelschienen verbunden ist;

wobei das Muster derart ausgestattet ist, dass der Abstand oder die Liniendicke unregelmäßig ist,
das leitfähige Heizmuster durch Verwendung eines Offsetdruckverfahrens geformt ist, und
eine Abweichung der Durchlässigkeit für sichtbares Licht des Heizelements 5% oder weniger, bezogen auf einen vorher bestimmten Kreis, der einen Durchmesser von 20 cm hat, ist.

**6.** Heizelement nach Anspruch 5, wobei ein Abstand zwischen den Linien des leitfähigen Heizmusters 30 mm oder weniger ist und eine Höhe der Linie von der Oberfläche des transparenten Substrats in dem Bereich von 1 bis 100 μm ist.

**7.** Heizelement nach Anspruch 5, wobei eine Temperaturabweichung innerhalb von 5 Minuten nach einer Heiztätigkeit 10% oder weniger mit einer Durchlässigkeitsabweichung des leitfähigen Heizmusters von 5% oder weniger, bezogen auf einen vorher bestimmten Kreis, der einen Durchmesser von 20 cm hat, ist.

**8.** Heizelement nach Anspruch 5, wobei 5 oder mehr Musterlinien pro 1 cm der Länge der Sammelschiene angeordnet sind.

**9.** Heizelement nach Anspruch 5, wobei das Heizelement zumindest zwei Bereiche umfasst, die verschiedene leitfähige Heizmuster haben.

**10.** Heizelement nach Anspruch 5, wobei das Heizelement einen Bereich umfasst, wobei das leitfähige Heizmuster nicht derart geformt ist, dass der Bereich durchlässt und eine vorher bestimmte Frequenz empfängt.

**11.** Heizelement nach Anspruch 5, wobei das leitfähige Heizmuster geschwärzt ist.

**12.** Heizelement nach Anspruch 5, wobei das Heizelement eine zusätzliche transparente Substanz umfasst, die auf c) dem Heizmuster bereitgestellt ist.

**13.** Heizelement nach Anspruch 5, wobei das transparente Substrat ein Glas oder Kunststoffsubstrat ist.

**14.** Heizelement nach Anspruch 5, wobei das Heizelement für eine Frontscheibe von Fahrzeugen ist.

## Revendications

**1.** Un procédé de fabrication d'un élément chauffant, le procédé comprenant :

la détermination de la forme d'un motif dans laquelle une largeur de ligne est de 50 micromètres ou moins et où le rapport d'ouverture est compris entre 70% et 99% ;
l'impression d'une pâte (5) qui inclut le matériau chauffant conducteur selon le motif déterminé sur au moins un côté d'un substrat transparent (4) ;
la formation d'un motif chauffant conducteur par la cuisson de la pâte imprimée (5) qui inclut le matériau chauffant conducteur ;
la formation de barres-bus des deux côtés du motif chauffant conducteur ; et
la fourniture d'une partie alimentation électrique qui est connectée aux barres-bus ;
où le motif est configuré de sorte que l'intervalle ou l'épaisseur des lignes soit irrégulier,
où l'impression utilise un procédé d'impression offset, et
un écart de transmittance de la lumière visible de l'élément chauffant est 5% ou moins par rapport à un cercle prédéterminé d'un diamètre de 20 cm.

2. Le procédé de fabrication d'un élément chauffant selon la revendication 1, où l'impression est exécutée de sorte qu'un intervalle entre les lignes d'impression motifs soit de 30 mm ou moins après cuisson, et où la hauteur de la ligne à partir de la surface du substrat transparent est comprise entre 1 et 100 micromètres.

3. Le procédé de fabrication d'un élément chauffant selon la revendication 1, où le motif est un ou plusieurs motifs combinés de rayure, losange, treillis, cercle, motif de vague, grille, grille en 2 dimensions, motif de marée et motif sinusoïdal.

4. Le procédé de fabrication d'un élément chauffant selon la revendication 1, comprenant en plus une couche d'une substance transparente additionnelle sur une surface sur laquelle le motif chauffant conducteur du substrat transparent est formé et fixé.

5. Un élément chauffant obtenu par le procédé selon l'une des revendications 1 à 4, l'élément chauffant comprenant :

   a) un substrat transparent (4) ;
   b) un motif chauffant conducteur (5) qui est disposé sur au moins un côté du substrat transparent (4), ayant une largeur de ligne du motif de 50 micromètres ou moins, le rapport d'ouverture du motif étant compris entre 70% et 99% ;
   c) des barres-bus qui sont disposées sur les deux extrémités du motif chauffant conducteur ; et
   d) une partie alimentation électrique connectée aux barres-bus ;

où le motif est configuré de sorte que l'intervalle ou l'épaisseur des lignes soit irrégulier,
le motif chauffant conducteur est formé en utilisant un procédé d'impression offset, et
un écart de transmittance de la lumière visible de l'élément chauffant est 5% ou moins par rapport à un cercle prédéterminé d'un diamètre de 20 cm.

6. L'élément chauffant selon la revendication 5, où un intervalle entre les lignes des motifs chauffants conducteurs est de 30 mm ou moins, et où la hauteur de la ligne à partir de la surface du substrat transparent est comprise entre 1 et 100 micromètres.

7. L'élément chauffant selon la revendication 5, où un écart de température dans les 5 minutes d'une opération de chauffage est 10% ou moins par un écart de transmittance du motif chauffant conducteur de 5% ou moins par rapport à un cercle prédéterminé d'un diamètre de 20 cm.

8. L'élément chauffant selon la revendication 5, où 5 lignes du motif ou plus sont disposées par centimètre de longueur de la barre-bus.

9. L'élément chauffant selon la revendication 5, où l'élément chauffant inclut au moins deux zones qui ont des motifs chauffants conducteurs différents.

10. L'élément chauffant selon la revendication 5, où l'élément chauffant inclut une zone dans laquelle le motif chauffant conducteur n'est pas formé de sorte que la zone transmette et reçoive une fréquence prédéterminée.

11. L'élément chauffant selon la revendication 5, où le motif chauffant conducteur est noirci.

12. L'élément chauffant selon la revendication 5, où l'élément chauffant inclut une substance transparente additionnelle qui est fournie sur c) le motif chauffant.

13. L'élément chauffant selon la revendication 5, où le substrat transparent est un substrat en verre ou en plastique.

**14.** L'élément chauffant selon la revendication 5, où l'élément chauffant est pour une vitre avant de véhicules.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

**Driver**

[Figure 12]

**Driver**

[Figure 13]

**Driver**

[Figure 14]

A

B

C

**Driver**

[Figure 15]

A

B

C

**Driver**

[Figure 16]

**Driver**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1202527 A
- EP 1605729 A2